(19) Europäisches Patentamt

European Patent Office

Office européen des brevets

(11) EP 1 528 737 B1

(12) **EUROPEAN PATENT SPECIFICATION**

(45) Date of publication and mention
of the grant of the patent:
**14.06.2006 Bulletin 2006/24**

(51) Int Cl.:
***H04L 12/64*** *(2006.01)*

(21) Application number: **04025411.2**

(22) Date of filing: **26.10.2004**

(54) **Data transfer method and data transfer apparatus for hybrid isochronous/ asynchronous networks**

Verfahren und Vorrichtung zur Datenübertragung für hybride isochrone/asynchrone Netzwerke

Procédé et disposif de transfert de données pour réseaux hybrides isochrones/asynchrones

(84) Designated Contracting States:
**AT BE BG CH CY CZ DE DK EE ES FI FR GB GR HU IE IT LI LU MC NL PL PT RO SE SI SK TR**

(30) Priority: **28.10.2003 JP 2003367889**

(43) Date of publication of application:
**04.05.2005 Bulletin 2005/18**

(73) Proprietor: **MATSUSHITA ELECTRIC INDUSTRIAL CO., LTD.**
**Kadoma-shi, Osaka 571-8501 (JP)**

(72) Inventors:
• **Kinoshita, Keisuke**
**Katano-shi**
**Osaka-fu 576-0016 (JP)**

• **Kohri, Toshiyuki**
**Hirakata-shi**
**Osaka-fu 573-0075 (JP)**

(74) Representative: **Gassner, Wolfgang**
**Dr. Gassner & Partner**
**Nägelsbachstrasse 49a**
**91052 Erlangen (DE)**

(56) References cited:
**EP-A- 1 087 572        US-A1- 2002 103 947**
**US-A1- 2002 176 436**

• **IEEE-SA: "IEEE Standard for a high Performance Serial Bus" IEEE STD 1394-1995, 12 December 1995 (1995-12-12), pages 291-300, XP002314059**
• **IEEE-SA: "IEEE Standard for a High-Performance Serial Bus-Amendment 2" IEEE STD 1394B-2002, 14 February 2002 (2002-02-14), XP002314060**

**Description**

BACKGROUND OF THE INVENTION

Field of the Invention

The present invention relates to a method and apparatus for data transfer among a plurality of devices. More particularly, the present invention relates to a method and apparatus for data transfer which performs data transfer by applying time-multiplex to data signals which require periodic transmission and to sporadically-occurring asynchronous data signals.

Description of the Background Art

There have been networking efforts being made to enable collective management and processing of video and audio data, etc., which have come to be digitalized due to the prevalence of digital devices. Between given digital devices, data signals which require periodic transmission (e.g., video and audio or the like) and sporadically-occurring data signals (e.g., still images, text, or control signals for the devices) may be transmitted. A network of the aforementioned nature may adopt a data transfer system in which those two types data signals are transmitted in an intermixed manner.

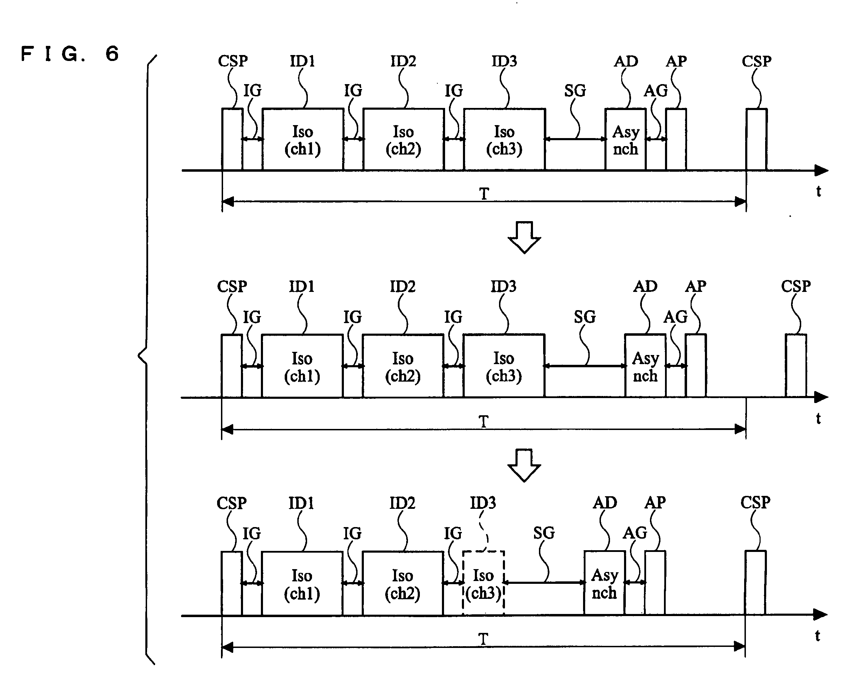

A data transfer system which is adaptable to the aforementioned type of digital interface is the IEEE1394 standard. The IEEE1394 standard has been proposed by the IEEE (Institute of Electrical and Electronics Engineers). The IEEE1394 standard can be subclassified into the IEEE1394-1995 standard, the IEEE1394a-2000 standard, the IEEE1394b-2002 standard, and so on. The IEEE1394 standard is characterized so as to enable transmission of both data signals which require periodic transmission (e.g., video or audio) and sporadically-occurring asynchronous data signals (e.g., control signals or still images). Hereinafter, with reference to FIG. 6, the outline of a data transfer method under the IEEE1394 standard will be described. FIG. 6 is a diagram illustrating data signal timing in a IEEE1394-compliant data transfer method, where time (t) is taken on the horizontal axis.

As shown in the upper diagram of FIG. 6, according to the IEEE1394 standard, a type of synchronization signal called a cycle start packet CSP is transmitted every period of T (e.g., about 125 $\mu$s). After the cycle start packet CSP, a device which has made a prior reservation sequentially transfers data IDs in a mode called isochronous (Isochronous; Iso) transfer. Then, after the lapse of a certain signalless period (i.e., a period during which no signal appears on the transmission path) since the isochronous transfer is completed, a data transmission is performed in response to a request for a transfer of sporadically-occurring data, in a mode called asynchronous (Asynchronous; Asynch) transfer. For example, real-time data such as video or audio is transmitted in the isochronous transfer mode, in which a device that has made a prior reservation is granted a data transfer following a cycle start packet CSP. On the other hand, sporadic data such as control signals or still images is transmitted in the asynchronous transfer mode.

To illustrate a specific example, after a cycle start packet CSP, a signalless period which is defined as an isochronous gap (Isochronous gap)IG is observed, after which isochronous transfers are performed. In the upper diagram of FIG. 6, three channels of isochronous transfers are performed, respectively indicated as isochronous data ID1 to ID3. Note that an isochronous gap IG is observed between isochronous data ID1 and ID2 and between isochronous data ID2 and ID3.

After the isochronous transfers are completed, a signalless period which is defined as a subaction gap (Subaction gap) SG--which is meant to be longer than an isochronous gap IGis observed. Thereafter, an asynchronous transfer is performed. In the upper diagram of FIG. 6, asynchronous data AD represents the asynchronous transfer. In an isochronous transfer, any device receiving an isochronous data ID returns no signal. On the other hand, in an asynchronous transfer, a device which is the recipient of asynchronous data AD returns an acknowledge (Acknowledge) signal. The acknowledge signal, which is represented as an acknowledge packet (Acknowledge packet) AP in the upper diagram of FIG. 6, is transmitted after the lapse of a signalless period which is defined as an acknowledge gap (Acknowledge gap) AG. After the transmission of the acknowledge packet AP, a further signalless period is observed, after which a next cycle start packet CSP is transmitted. Note that the signalless period between the acknowledge packet AP and the cycle start packet CSP is prescribed to be longer than an isochronous gap IG.

In accordance with the above-described data signal timing, each device performs data transfers while detecting signalless periods on the transmission path. After receiving a cycle start packet CSP, each device detects a signalless period which has the defined duration of an isochronous gap IG. Then, any device that wishes to perform an isochronous transfer engages in a negotiation for obtaining a right to transmit an isochronous data ID, and a device which has won in the negotiation performs an isochronous transfer. After completion of the isochronous transfer, if a signalless period which has the defined duration of a subaction gap SG is detected, any device that wishes to perform an asynchronous transfer engages in a negotiation, and a device which has won in the negotiation performs an asynchronous transfer. Then, after the lapse of a signalless period which has the defined duration of an acknowledge gap AG, a device which is the recipient of the asynchronous data AD returns an acknowledge packet AP. Note that the acknowledge packet AP is to be returned without having to perform a negotiation.

As disclosed in Japanese Laid-Open Patent Publication No. 2001-77835, EP 1087572, the IEEE1394-1995 standard and the IEEE1394a-2000 standard stipulate use of electrical cables to provide connection between devices over a distance of 4.5 m. However, in order to support a situation where a long transmission distance exists between devices, the IEEE1394b-2002 standard allows for longer transmission distances of up to 50 m or more, by using optical fibers. As a result, it has become possible to employ the IEEE1394 standard for purposes such as transmitting digital data (which may have been captured by means of a camera, etc.) over an optical fiber, and receiving the digital data at a remote image receiver or the like.

When performing a long-distance transmission between devices, a transmission delay time incurred for the transmission between the devices may present a problem. For instance, although an acknowledge packet AP should be returned after an asynchronous transfer is performed, if the transmission delay time between devices becomes so long that no acknowledge packet AP is returned within the period of time defined as a subaction gap SG, another device may begin negotiation upon detecting the subaction gap SG. In this case, a proper returning of an acknowledge packet AP cannot occur. Moreover, since an acknowledge packet AP is not returned, the device which has performed the asynchronous transfer may determine that the network is in an abnormal state, and therefore retry an asynchronous transfer or even initialize the network. For such reasons, it is necessary that the transmission delay time between devices be not more than the subaction gap SG. Under the IEEE1394 standard, the subaction gap SG is set on the basis of the value of a parameter called "gap count". The subaction gap SG becomes longer as the value of the gap count increases. Hence, in order to account for the aforementioned transmission delay time when performing a long-distance transmission, it is necessary to prescribe a large gap count value.

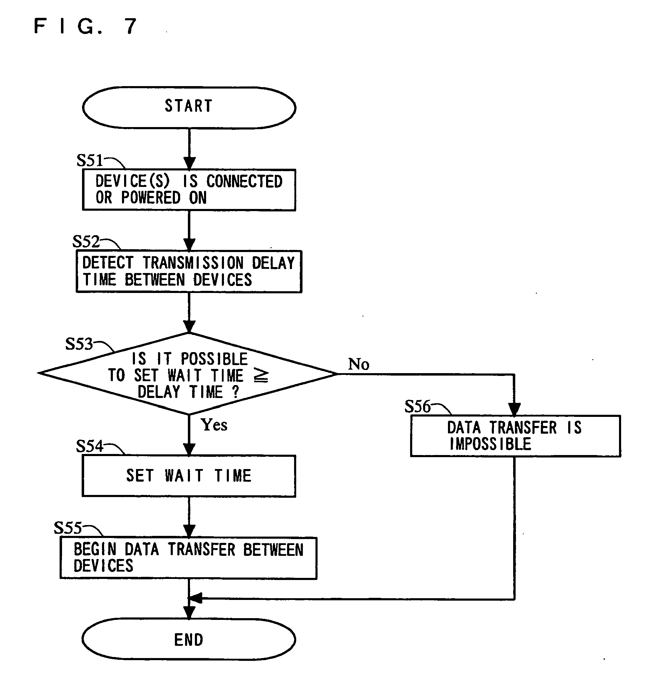

With reference to FIG. 7, a conventional data transfer method under the IEEE1394 standard will be described. FIG. 7 is a flowchart illustrating a flow of processes by the conventional data transfer method.

Referring to FIG. 7, a device may be connected to a network, or powered on (step S51). Next, a transmission delay time which is required for data transfer between devices is detected (step S52). For example, the transmission delay time may be determined by detecting, among the devices, the number of devices (hop count) from a master station (root) to another device (slave station: any station other than the root), and multiplying the detected number by a fixed value. Then, it is determined whether a wait time to be observed after the device detects a signalless period on the transmission path and until the device begins a data transfer (e.g., a wait time corresponding to the subaction gap SG) can be set longer than the transmission delay time which has been detected at step S52 (step S53). For example, the wait time may be set on the basis of the aforementioned gap count, and it may be determined whether the wait time can be set so as to be longer than the transmission delay time while remaining within the allowable range of gap count values (e.g., 0 to 63).

If the wait time cannot be set longer than the transmission delay time, data transfer between devices is determined to be impossible (step S56), and the processing under this flowchart is ended. On the other hand, if it is possible to set a wait time which is longer than the transmission delay time, a wait time (signalless period) which is longer than the transmission delay time is set (step S54). As the gap count value defining the wait time, any arbitrary value which is equal to or greater than the transmission delay time and which is equal to or less than the aforementioned allowable range of gap count values is set. For example, a maximum value within the allowable range (e.g., 63) or a fixed value (e.g., 44) may be set. Then, data transfer between the devices is begun (step S55), and the processing under this flowchart is ended.

In the above-described data transfer system, long-distance transmission between devices can be enabled by prescribing a wait time corresponding to a signalless period (e. g. , subaction gap SG) on the transmission path so as to be longer than the transmission delay time. However, in a data transfer system where transmission is performed by applying time-multiplex to two kinds of data signals, i.e., data signals which require periodic transmission such as video or audio, and sporadically-occurring asynchronous data signal such as still images, the following problems may occur as a result of prescribing a wait time (signalless period) which is long (e.g., a maximum value within the aforementioned range).

Let us take the IEEE1394 scenario shown in FIG. 6, for example. As shown in the middle diagram of FIG. 6, if the subaction gap SG and the signalless period between the acknowledge packet AP and the subsequent cycle start packet CSP are set relatively long (while otherwise adopting the same data signal timing as that shown in the upper diagram of FIG. 6), the cycle start packets CSP will be transferred with an interval which is equal to or greater than the period T. In this case, transmission of asynchronous data signals such as still images (asynchronous transfer) is still possible, although a long transmission delay time will be incurred for these data signals. On the other hand, transmission of data signals which require periodic transmission, e.g., video or audio, (isochronous transfer) cannot occur within the required time period, because of prescribing a long signalless period (subaction gap SG). Therefore, in data transfer according to the IEEE1394 standard, as shown in the lower diagram of FIG. 6, a portion of the data signals for isochronous transfer (e.g., a potion of the isochronous data ID3) is allowed to be lost in order to keep the cycle period of the cycle start packets CSP within the period T. In this manner, data transfer requiring periodic transmission cannot be properly performed, and data cannot be properly received at a device such as an image receiver or the like.

On the other hand, in accordance with the method and apparatus of information communication disclosed in Japanese Laid-Open Patent Publication No. 2001-77835, which relies on the IEEE1394-1995 standard and the IEEE1394a-2000 standard, the maximum hop count in the network is detected, the transmission path distance is set to be 4.5 m, and a necessary data transmission bandwidth and a necessary wait time are determined. However, the method disclosed in Japanese Laid-Open Patent Publication No. 2001-77835 cannot be applied to the IEEE1394b-2002 standard, which envisages a long-distance transmission using optical fibers.

## SUMMARY OF THE INVENTION

Therefore, an object of the present invention is to provide a method and apparatus for data transfer which, when performing long-distance transmissions between devices by applying time-multiplex to data signals which require periodic transmission and to sporadically-occurring asynchronous data signals, sets an appropriate wait time for each device so that long-distance transmission is enabled while obtaining a necessary transmission bandwidth for real-time data.

The present invention has the following features to attain the object mentioned above. Note that reference numerals and the like are added between parentheses in the below description, only for the purpose of facilitating the understanding of the present invention in relation to the below-described embodiments, rather than limiting the scope of the invention in any way.

According to the present invention, there is provided a data transfer apparatus (1a, 10a) used in a data transfer system for exchanging data with another apparatus (1b, 10b, 10c) in the data transfer system via a transmission path (2), the data comprising a periodic data signal (real-time data; ID1 to ID3) which requires periodic transmission and a sporadically-occurring asynchronous sporadic data signal (sporadic data; AD, AP), the periodic data signal and the sporadic data signal being time-multiplexed with each other. The data transfer apparatus comprises a transmission/reception section (11a), a delay time detection section (12a), a bandwidth detection section (18a), a wait time setting section (14a), and a comparison section (15a). The transmission/reception section exchanges the periodic data signal and the sporadic data signal with the other apparatus via the transmission path. The delay time detection section detects a transmission delay time incurred when exchanging a data signal with the other apparatus (S2). The bandwidth detection section detects a bandwidth (T2) required for exchanging the periodic data signal (S4). The signalless period detection section detects a signalless period (SG) in a data signal which is transmitted on the transmission path. The wait time setting section sets a wait time (T4) to be observed before beginning a data transfer in response to the detected signalless period, such that the wait time is (S3) equal to or greater than the transmission delay time detected by the delay time detection section and guarantees (S4) the bandwidth detected by the bandwidth detection section (S5). The comparison section, if the detected signalless period is longer than the wait time set by the wait time setting section, begins a data transfer from the transmission/reception section (S6, S7).

For example, the wait time setting section sets a wait time (T4 corresponding to SG) to be observed before beginning a data transfer of the sporadic data signal in response to the detected signalless period. The periodic data signal and the sporadic data signal may be transmitted on the transmission path with a certain cycle, the certain cycle falling between synchronization signals (CSP) which are generated with a predetermined cycle period (T). In this case, the wait time setting section sets the wait time so as to guarantee the bandwidth detected by the bandwidth detection section by ensuring that the wait time, denoted as T4, satisfies the relationship: $T4 \leqq \{T-(T1+T2+T3)\}/2$, where T denotes the predetermined cycle period; T1 denotes a transmission bandwidth required for each synchronization signal; T2 denotes the bandwidth required for exchanging the periodic data signal as detected by the bandwidth detection section; and T3 denotes a bandwidth required for exchanging the sporadic data signal. In one example, the bandwidth required for exchanging the periodic data signal as detected by the bandwidth detection section is a bandwidth for isochronous transfer under the IEEE1394 standard, the bandwidth required for exchanging the sporadic data signal is a bandwidth for asynchronous transfer under the IEEE1394 standard, and the transmission bandwidth required for each synchronization signal is a transmission bandwidth for a cycle start packet under the IEEE1394 standard.

In one example, the delay time detection section transmits via the transmission/reception section a control signal for enabling detection of the transmission delay time to the other apparatus, thereafter receives via the transmission/reception section a reply signal returned from the other apparatus in response to the control signal, and detects the transmission delay time based on a point in time at which the control signal is transmitted and a point in time at which the reply signal is received. In another example, the data transfer apparatus further comprises an apparatus designation section (19a) for designating, in the data transfer system, a pair of apparatuses which exchange a data signal with each other, wherein the delay time detection section detects a transmission delay time incurred when a data signal is exchanged between the pair of apparatuses designated by the apparatus designation section. Furthermore, the delay time detection section may transmit via the transmission/reception section a control signal for enabling detection of the transmission delay time to all other apparatuses in the data transfer system, thereafter receive via the transmission/reception section a reply signal returned from each of the other apparatuses in response to the control signal, and detect the transmission delay time for each of the other apparatuses based on a point in time at which the control signal is transmitted and a point in time at which each reply signal is received. In this case, the delay time detection section detects a first transmission delay time based on the point in time at which the control signal is transmitted and the point in time at which the reply signal is received from a first one of the other apparatuses, detects a second transmission delay time based on the point in time at which the control signal is transmitted and the point in time at which the reply signal is received from a second one of the other apparatuses, and subtracts the first transmission delay time from the second transmission delay time, or vice versa, to calculate a transmission delay time with respect to the pair of first and second other apparatuses as designated by the apparatus designation section.

In one example, the bandwidth detection section detects the bandwidth required for exchanging the periodic data signal based on a control signal which is previously transmitted in order to guarantee the bandwidth used for transmitting the periodic data signal.

As a first example, the data transfer apparatus further comprises a storage section (17a, etc.) having previously stored therein information of a transmission delay time to be incurred when exchanging a data signal with the other apparatus, wherein the delay time detection section uses the information stored in the storage section to detect the transmission delay time incurred when exchanging a data signal with the other apparatus. As a second example, the data transfer apparatus further comprises a storage section having previously stored therein information for exchanging the periodic data signal, wherein the bandwidth detection section uses the information stored in the storage section to detect the bandwidth required for exchanging the periodic data signal.

According to the present invention, there is also provided a data transfer method for allowing one of a plurality of apparatuses in a data transfer system to exchange data with another apparatus in the data transfer system via a transmission path, the data comprising a periodic data signal which requires periodic transmission and a sporadically-occurring asynchronous sporadic data signal, the periodic data signal and the sporadic data signal being time-multiplexed with each other. The data transfer method comprises a delay time detection step, a bandwidth detection step, a signalless period detection step, a wait time setting step, and a transmission beginning step. The delay time detection step detects a transmission delay time incurred when exchanging a data signal with the other apparatus. The bandwidth detection step detects a bandwidth required for at least one apparatus in the data transfer system to exchange the periodic data signal. The signalless period detection step detects a signalless period in a data signal which is transmitted on the transmission path. The wait time setting step sets a wait time to be observed before beginning a data transfer in response to the detected signalless period, such that the wait time is equal to or greater than the transmission delay time detected by the delay time detection step and guarantees the bandwidth detected by the bandwidth detection step. The transmission beginning step, if the detected signalless period is longer than the wait time set by the wait time setting step, allows at least one apparatus in the data transfer system to begin a data transfer.

For example, the wait time setting step sets a wait time to be observed before beginning a data transfer of the sporadic data signal in response to the detected signalless period. The periodic data signal and the sporadic data signal may be transmitted on the transmission path with a certain cycle, the certain cycle falling between synchronization signals which are generated with a predetermined cycle period. In this case, the wait time setting step sets the wait time so as to guarantee the bandwidth detected by the bandwidth detection step by ensuring that the wait time, denoted as $T4$, satisfies the relationship: $T4 \leqq \{T- (T1+T2+T3)\}/2$, where $T$ denotes the predetermined cycle period; $T1$ denotes a transmission bandwidth required for each synchronization signal; $T2$ denotes the bandwidth required for exchanging the periodic data signal as detected by the bandwidth detection step; and $T3$ denotes a bandwidth required for exchanging the sporadic data signal. In one example, the bandwidth required for exchanging the periodic data signal as detected by the bandwidth detection step is a bandwidth for isochronous transfer under the IEEE1394 standard, the bandwidth required for exchanging the sporadic data signal is a bandwidth for asynchronous transfer under the IEEE1394 standard, and the transmission bandwidth required for each synchronization signal is a transmission bandwidth for a cycle start packet under the IEEE1394 standard.

In one example, the delay time detection step transmits in the transmission/reception step a control signal for enabling detection of the transmission delay time to the other apparatus, thereafter receives in the transmission/reception step a reply signal returned from the other apparatus in response to the control signal, and detects the transmission delay time based on a point in time at which the control signal is transmitted and a point in time at which the reply signal is received. In another example, the data transfer method further comprises an apparatus designation step for designating, in the data transfer system, a pair of apparatuses which exchange a data signal with each other, wherein the delay time detection step detects a transmission delay time incurred when a data signal is exchanged between the pair of apparatuses designated by the apparatus designation step. The delay time detection step may transmit in the transmission/reception step a control signal for enabling detection of the transmission delay time to all other apparatuses in the data transfer system, thereafter receive in the transmission/reception step a reply signal returned from each of the other apparatuses in response to the control signal, and detect the transmission delay time for each of the other apparatuses based on a point in time at which the control signal is transmitted and a point in time at which each reply signal is received. In this case, the delay time detection step detects a first transmission delay time based on the point in time at which the control signal is transmitted and the point in time at which the reply signal is received from a first one of the other apparatuses, detects a second transmission delay time based on the point in time at which the control signal is transmitted and the point in time at which the reply signal is received from a second one of the other apparatuses, and subtracts the first transmission delay time from the second transmission delay time, or vice versa, to calculate a transmission delay time with respect to the pair of first and second other apparatuses as designated by the apparatus designation step.

In one example, the bandwidth detection step detects the bandwidth required for exchanging the periodic data signal based on a control signal which is previously transmitted in order to guarantee the bandwidth used for transmitting the periodic data signal.

As a first example, the delay time detection step detects the transmission delay time incurred when exchanging a data signal with the other apparatus by using previously-set information. As a second example, the bandwidth detection step detects the bandwidth required for exchanging the periodic data signal by using previously-set information.

According to the present invention, there is also provided a data transfer method for allowing one of a plurality of apparatuses in a data transfer system to exchange data with another apparatus in the data transfer system via a transmission path, the data comprising a periodic data signal which requires periodic transmission and a sporadically-occurring asynchronous sporadic data signal, the periodic data signal and the sporadic data signal being time-multiplexed with each other, the data transfer method comprising: in accordance with a change in a transmission delay time incurred when exchanging a data signal with the other apparatus, varying a wait time to be observed before beginning a data transfer in response to a signalless period in a data signal which is transmitted on the transmission path, such that the wait time is equal to or greater than the transmission delay time and guarantees a bandwidth required for exchanging the periodic data signal.

In accordance with a data transfer apparatus of the present invention, a periodic data signal requiring periodic transmission and a sporadically-occurring asynchronous sporadic data signal are time-multiplexed and transferred between the apparatus and another apparatus. A wait time to be observed before beginning a data transfer in response to a signalless period is prescribed so as to be equal to or greater than a transmission delay time between the apparatuses and to guarantee a bandwidth for the periodic data signal. As a result, it becomes possible to perform a long-distance transmission for the time-multiplexed periodic data signal and sporadic data signal.

The wait time T4 can be easily set so as to satisfy the relationship $T4 \leqq \{T-(T1+T2+T3)\}/2$, where T denotes a cycle period; T1 denotes a transmission bandwidth required for each synchronization signal; T2 denotes the bandwidth required for exchanging the periodic data signal as detected by the bandwidth detection section; and T3 denotes a bandwidth required for exchanging the sporadic data signal. Furthermore, the digital interface is applicable to isochronous transfer and asynchronous transfer defined under the IEEE1394 standard (e.g., the IEEE1394b-2002 standard), and is applicable to a system which is based on the precept that a long-distance transmission is to be performed for a periodic data signal and a sporadic data signal which have been subjected to time-multiplex.

In an embodiment where the transmission delay time between the apparatuses is set based on the amount of time required for one apparatus to transmit a control signal and for the other apparatus to return a reply signal, a more realistic and efficient transmission delay time can be detected than in a method which sets a wait time based on a number of apparatuses (hop count).

In an embodiment where a wait time is set by only using the transmission delay time between apparatuses which mutually exchange data signals and corresponding reply signals, it is possible to prescribe a wait time which does not produce any superfluous signalless periods (i.e., a wait time which disregards the transmission delay time for any pair of data transfer apparatuses between which data transfer is not performed), whereby an efficient wait time can be set. Furthermore, the transmission delay time between such apparatuses can be easily obtained by performing, among each apparatus's transmission delay time taken with respect to a reference (root) apparatus, performing a subtraction for selected transmission delay times.

The bandwidth required for exchanging a periodic data signal can be detected based on a control signal which is previously transmitted in order to guarantee the bandwidth to be used for exchanging the periodic data signal. However, in a data transfer system whose network configuration never changes, information concerning the transmission delay time between apparatuses and the bandwidth required for the periodic data signal can be previously obtained through measurement or calculation, and the wait time can be easily set on the basis of such information.

In accordance with the data transfer method of the present invention, similar effects to those obtained with the aforementioned data transfer apparatus can be obtained.

These and other objects, features, aspects and advantages of the present invention will become more apparent from the following detailed description of the present invention when taken in conjunction with the accompanying drawings.

BRIEF DESCRIPTION OF THE DRAWINGS

FIG. 1 is a block diagram illustrating the structure of a data transfer system according to a first embodiment of the present invention;

FIG. 2 is a flowchart illustrating an operation of the data transfer system shown in FIG. 1;

FIG. 3 is a diagram showing data signal timing for illustrating a specific exemplary operation performed by a wait time setting section 14a shown in FIG. 1;

FIG. 4 is a schematic block diagram illustrating an overall data transfer system according to a second embodiment of the present invention;

FIG. 5 is a block diagram illustrating the structure of the data transfer system shown in FIG. 4;

FIG. 6 is a diagram illustrating data signal timing in a IEEE1394-compliant data transfer method, where time (t) is taken on the horizontal axis; and

FIG. 7 is a flowchart illustrating an operation according to a conventional data transfer method.

DESCRIPTION OF THE PREFERRED EMBODIMENTS

(first embodiment)

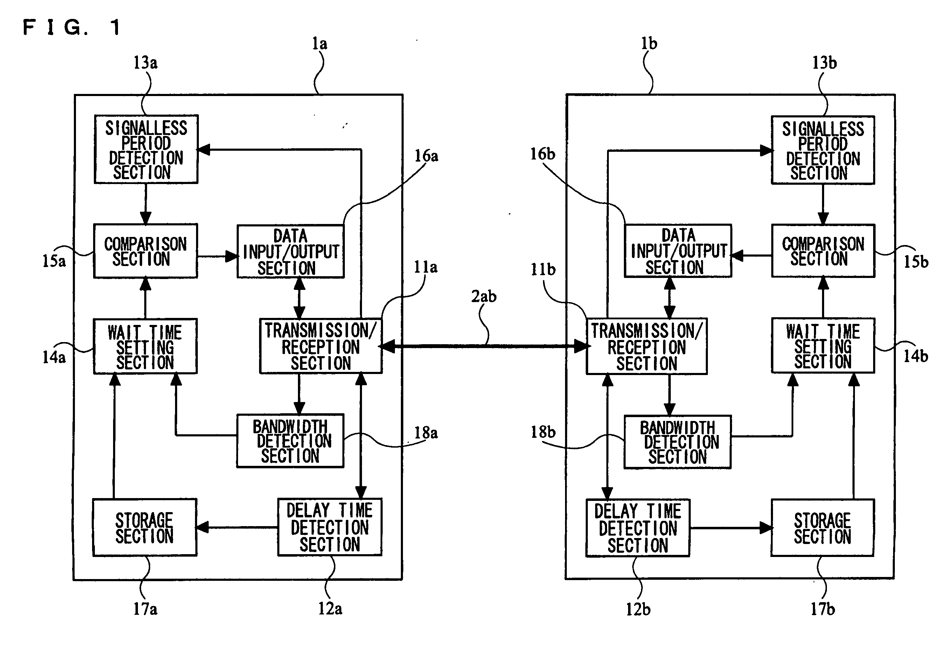

Referring to FIG. 1, the structure of a data transfer system according to a first embodiment of the present invention will be described. FIG. 1 is a block diagram illustrating the structure of the data transfer system. For conciseness, the data transfer system will be described with respect to a specific example in which two data transfer apparatuses 1a and 1b are connected to each other via a transmission path 2ab.

Referring to FIG. 1, the data transfer system comprises the data transfer apparatuses 1a and 1b and the transmission path 2ab. Note that each of the data transfer apparatuses 1a and 1b is a data transfer apparatus according to the present invention. The data transfer apparatus 1a includes a transmission/reception section 11a, a delay time detection section 12a, a signalless period detection section 13a, a wait time setting section 14a, a comparison section 15a, a data input/output section 16a, a storage section 17a, and a bandwidth detection section 18a. The data transfer apparatus1bincludes a transmission/reception section11b, a delay time detection section 12b, a signalless period detection section 13b, a wait time setting section 14b, a comparison section 15b, a data input/output section 16b, a storage section 17b, and a bandwidth detection section 18b. Each of the transmission/reception sections 11a and 11b is implemented as an interface. Each of the storage sections 17a and 17b is composed of a storage device, such as a memory. The component elements of the data transfer apparatuses 1a and 1b may be implemented by using a commonly-used computer (microcomputer) or the like. In the case where a long transmission distance exists between the data transfer apparatuses 1a and 1b, such that IEEE1394b-2002 standard must be used as a digital interface applicable to the data transfer system, an optical fiber is to be used as the transmission path 2ab. The transmission/reception section 11a of the data transfer apparatus 1a and the transmission/reception section 11b of the data transfer apparatus 1b are connected to each other via the transmission path 2ab.

Via the transmission path 2ab, a data transfer is performed between the data transfer apparatuses 1a and 1b by applying time-multiplex to data signals which require periodic transmission (hereinafter referred to as "real-time data") and sporadically-occurring asynchronous data signals (hereinafter referred to as "sporadic data"). The transmission/ reception section 11a sends data signals onto the transmission path 2ab, from which the transmission/reception section 11b receives the data signals. The transmission/reception section 11b sends data signals onto the transmission path 2ab, from which the transmission/reception section 11a receives the data signals.

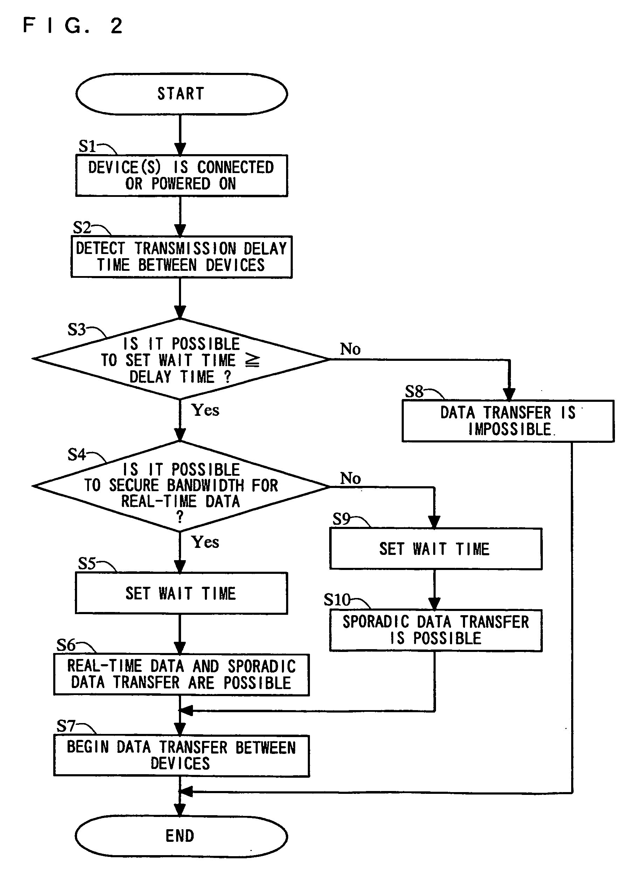

For example, the IEEE1394 standard may be applied as the digital interfaces in the data transfer system. As described earlier, the IEEE1394 standard is characterized so as to enable transmission of both data signals which require periodic transmission ("real-time data": e.g., video or audio) and sporadically-occurring asynchronous data signals ("sporadic data": e.g., control signals or still images). The data signal timing according to an IEEE1394-compliant data transfer method is the same as that shown in the upper diagram of FIG. 6, and the detailed description thereof is omitted. Furthermore, in order to cope with the situation where a long transmission distance exists between the apparatuses, the IEEE1394b-2002 standard, for example, may be adopted for the data transfer system. Since the data transfer apparatuses 1a and 1b have identical component elements, the data transfer apparatus 1a will mainly be described, and for conciseness, an example where the data transfer apparatus 1a is set as a master station (root) in the data transfer system will be described. Hereinafter, in the course of illustrating a data transfer method in the data transfer system, the operation of each component elements will be described by referring to FIGS. 1 and 2. FIG. 2 is a flowchart illustrating an operation of the data transfer system.

Referring to FIGS. 1 and 2, firstly, the data transfer apparatuses 1a and/or 1b are connected to the transmission path 2ab, or powered on (step S1). Next, a transmission delay time which is incurred for the data transfer between the data transfer apparatuses 1a and 1b is detected (step S2), and the process proceeds to the next step S3.

At the above step S2, the delay time detection section 12a outputs to the transmission/reception section 11a a control signal for beginning detection of the transmission delay time. At this time, the delay time detection section 12a retains information of the point in time at which the control signal was output. The control signal is sent from the transmission/reception section 11a onto the transmission path 2ab, and received by the transmission/reception section 11b of the data transfer apparatus 1b. The transmission/reception section 11b outputs the received control signal to the delay time detection section 12b. Next, after receiving the control signal which has been issued, the delay time detection section 12b outputs to the transmission/reception section 11b a reply signal to the control signal. The reply signal is sent from the transmission/reception section 11b onto the transmission path 2ab, and received by the transmission/reception section 11a of the data transfer apparatus 1a. The transmission/reception section 11a outputs the received reply signal to the delay time detection section 12a.

Next, the delay time detection section 12a detects the transmission delay time between the data transfer apparatuses 1a and 1b by comparing the point in time at which the control signal was output against the point in time at which the reply signal was received. The detected transmission delay time is output to the storage section 17a. In the case where the data transfer system comprises three or more data transfer apparatuses 1, the transmission delay time detected by each data transfer apparatus 1 is output to the storage section 17a of the data transfer apparatus 1a. The storage section 17a stores the received information of a transmission delay time, and, if necessary, outputs the information to the wait time setting section 14a.

At step S3, it is determined whether a wait time to be observed after each data transfer apparatus 1a or 1b detects a signalless period on the transmission path 2ab and until the data transfer apparatus 1a or 1b begins a data transfer can be prescribed to be equal to or longer than the transmission delay time which was detected at step S2. For example, the wait time may be set on the basis of a gap count value, and it may be determined whether a wait time which is longer than the transmission delay time can be set within the allowable range of gap count values. If the result of the determination indicates that a wait time which is equal to or longer than transmission delay time can be prescribed, then it is determined whether a bandwidth which is necessary for transmitting real-time data between the data transfer apparatuses 1a and 1b can be secured with such a wait time (step S4). In the case where the data transfer system comprises three or more data transfer apparatuses 1, the above determination is to be made with respect to the transmission delay time which is stored in the storage section 17a of each data transfer apparatus 1. If step S3 finds that a wait time which is equal to or greater than the transmission delay time cannot be set, the process proceeds to the next step S8. If step S4 finds that a bandwidth which is necessary for transmitting real-time data can be secured with the given wait time, the process proceeds to the next step S5. On the other hand, if step S4 finds that a bandwidth which is necessary for transmitting real-time data cannot be secured with the given wait time, the process proceeds to the next step S9.

The operations of the data transfer apparatuses 1a and 1b at steps S3 and S4 will be described. When the data input/output sections 16a and 16b perform an inter-apparatus data exchange, the data is to be transferred via the transmission/reception sections 11a and 11b. The data which is input to or output from the data input/output sections 16a and 16b is the aforementioned real-time data and/or sporadic data. Prior to a data transfer, the data transfer apparatus which is on the sending end of the real-time data transmits a control signal for securing a bandwidth (in terms of time) to be used. Via the transmission/reception sections 11a and 11b and the transmission path 2ab, the control signal is input to the bandwidth detection sections 18a and 18b. At this time, the bandwidth detection section 18a of the data transfer apparatus 1a calculates the bandwidth which is necessary for the transmission of real-time data as indicated by the control signal. Then, the bandwidth detection section 18a outputs the result of the calculation to the wait time setting section 14a. The wait time setting section 14a sets a wait time which is equal to or greater than the transmission delay time that is stored in the storage section 17a and which has been determined to enable real-time data transmission based on the result of the calculation output from the bandwidth detection section 18a, and outputs information of this wait time to the comparison section 15a.

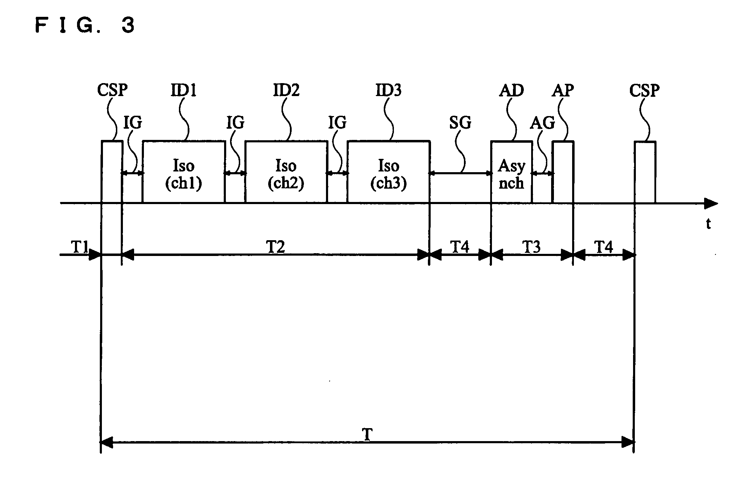

Referring to FIG. 3, a specific example of setting a wait time, which operation is performed by the wait time setting section 14a, will be described. As described above with reference to FIG. 6, in a data transfer system which is compatible with the IEEE1394 standard, real-time data and sporadic data are periodically transmitted with a cycle period (i.e., an interval by which cycle start packets CSP are transmitted) which is equal to a period T (e.g., 125 $\mu$s under the IEEE1394 standard). It is assumed herein that a cycle start packet CSP requires a transmission bandwidth (time) which is equal to a period T1. It is also assumed that a transmission bandwidth which is equal to a period T2 is required for the real-time data transmission as calculated by the bandwidth detection section 18a of the data transfer apparatus 1a (which, in the example shown in FIG. 3, corresponds to the isochronous data ID1 to ID3 and the isochronous gaps IG associated therewith; the bandwidth required for isochronous transfer). It is also assumed that a maximum transmission bandwidth which is equal to a period T3 may be required for sporadic data transmission (which, in the example shown in FIG. 3, corresponds to the asynchronous data AD, the acknowledge gap AG, and the acknowledge packet AP; the bandwidth required for asynchronous transfer). It is further assumed that the wait time to be set by the wait time setting section 14a (which, in the example shown in FIG. 3, corresponds to the subaction gap SG and the signalless period to be set between the acknowledge packet AP and the next cycle start packet CSP) is equal to a period T4. Under these assumptions, all of the periods T1 to T4 must be contained within the cycle period T. In other words, the following relationship must be satisfied:

$$T \geqq T1+T2+T3+T4 \times 2.$$

Stated otherwise, the wait time T4 to be set by the wait time setting section 14a is prescribed so as to be equal to or greater than the transmission delay time stored in the storage section 17a (i.e., equal to or longer than transmission delay time while remaining within the allowable range of gap count values), and to also satisfy the relationship:

$$T4 \leqq \{T-(T1+T2+T3)\}/2.$$

Thus, in the present data transfer system, a wait time is set at step S5 which can secure a sufficient bandwidth for the data transfer of real-time data which is transmitted between devices. Therefore, at step S6, the data transfer apparatuses 1a and 1b are capable of transferring real-time data and sporadic data by applying time-multiplex thereto. Then, the data transfer apparatuses 1a and 1b begin data signal transmission between themselves (step S7), and the processing under this flowchart is ended.

When performing data transfer between the apparatuses at step S7, the data transfer apparatuses 1a and 1b apply time-multiplex to real-time data and sporadic data. For example, the signalless period detection section 13a of the data transfer apparatus 1a detects a signalless period on the transmission path 2ab. The comparison section 15a compares the signalless period which has been detected by the signalless period detection section 13a against the wait time which has been set by the wait time setting section 14a. When the signalless period has become longer than the wait time, the comparison section 15a outputs to the data input/output section 16a a signal which enables outputting of real-time data or sporadic data. Then, the data input/output section 16a outputs data to the transmission/reception section 11a, thus beginning a data transfer. Since the mutual data transfer operations by the data transfer apparatuses 1a and 1b are the same as those described in the conventional techniques, any detailed description thereof is omitted here.

On the other hand, if step S4 finds that a bandwidth which is necessary for transmitting real-time data cannot be secured with the given wait time, the wait time setting section 14a sets a wait time which is equal to or greater than the transmission delay time stored in the storage section 17a (step S9). Thus, the data transfer apparatuses 1a and 1b become capable of transferring sporadic data (step S10). In other words, although connection between the apparatuses is possible, no real-time data transmission ability is guaranteed. Then, the data transfer apparatuses 1a and 1b begin data signal transmission between themselves (step S7), and the processing under this flowchart is ended. The operation to be performed each component elements at step S7 after undergoing step S10 is similar to that performed at step S7 after undergoing step S5. Alternatively, when the signalless period has become longer than the wait time, the comparison section 15a may output to the data input/output section 16a a signal which only enables outputting of sporadic data, thus allowing only sporadic data to be transmitted.

If step S3 finds that a wait time which is equal to or greater than the transmission delay time cannot be set, data transfer between the apparatuses is determined as impossible (step S8), and the processing under this flowchart is ended.

As described earlier, in conventional data transfer methods, a wait time is set to an arbitrary value which is selected so as to be equal to or greater than a transmission delay time while remaining within the allowable range of gap count values (e.g., a maximum value or a fixed value). On the other hand, the data transfer system according to the first embodiment prescribes a wait time which is equal to or greater than a transmission delay time between the data transfer apparatuses and which can guarantee a bandwidth necessary for data signals which require periodic transmission. As a result, it is possible to perform a long-distance transmission of data signals which require periodic transmission and sporadically-occurring asynchronous data signals by applying time-multiplex thereto.

Although the above example illustrates a case where a wait time is set by measuring a transmission delay time between the data transfer apparatuses 1a and 1b and calculating a bandwidth necessary for real-time data transmission after the devices are connected or powered on, the wait time may be set in any other manner. For example, in a data transfer system whose network configuration never changes, the transmission delay time between data transfer apparatuses can be previously obtained through prior measurement or calculation, and such transmission delay time information may be stored in a storage section in advance. Similarly, the bandwidth which is necessary for real-time data transmission can also be previously obtained through prior measurement or calculation, and such bandwidth information may be stored in a storage section in advance. In other words, without having to detect a transmission delay time between the data transfer apparatuses 1a and 1b by means of the delay time detection section 12a or 12b, or detect the bandwidth which is necessary for real-time data transmission by means of the bandwidth detection section 18a or 18b, the previously-determined wait time can be input to the storage sections 17a and 17b. In this case, it is possible to omit the delay time detection section 12a and the bandwidth detection section 18a of the data transfer apparatus 1a, and the delay time detection section 12b and the bandwidth detection section 18b of the data transfer apparatus 1b as shown in FIG. 1. Thus, by previously storing in a storage section the data which are necessary for setting a wait time, too, it becomes possible to perform a long-distance transmission of data signals which require periodic transmission and sporadically-occurring asynchronous data signals by applying time-multiplex thereto.

Although the above example illustrates a data transfer method in the case where data transfer is performed between two data transfer apparatuses, it will be appreciated that the present invention is also applicable to a network which comprises three or more data transfer apparatuses.

(second embodiment)

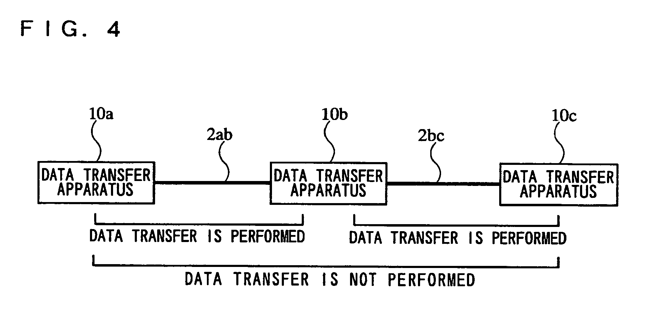

Among networks comprising three or more devices connected to one another, some networks may exist in which all devices mutually perform transmission of data signals and transmission/reception of corresponding reply signals, whereas other networks may exist in which exchange of data signals and reply signals occurs only between some of the devices. Turning to FIG. 4, a system will now be considered in which exchange of data signals and reply signals is performed between data transfer apparatuses 10a and 10b and between data transfer apparatuses 10b and 10c, but in which no exchange of data signals and reply signals is performed between the data transfer apparatuses 10a and 10c. In this case, although the longest transmission delay time would be incurred between the data transfer apparatuses 10a and 10c, no exchange of data signals and reply signals is actually performed between the data transfer apparatuses 10a and 10c. Therefore, prescribing a wait time which is equal to or greater than this longest transmission delay time would lead to unnecessary long signalless periods. According to a second embodiment of the present invention, an efficient wait time can be set even in such a data transfer system.

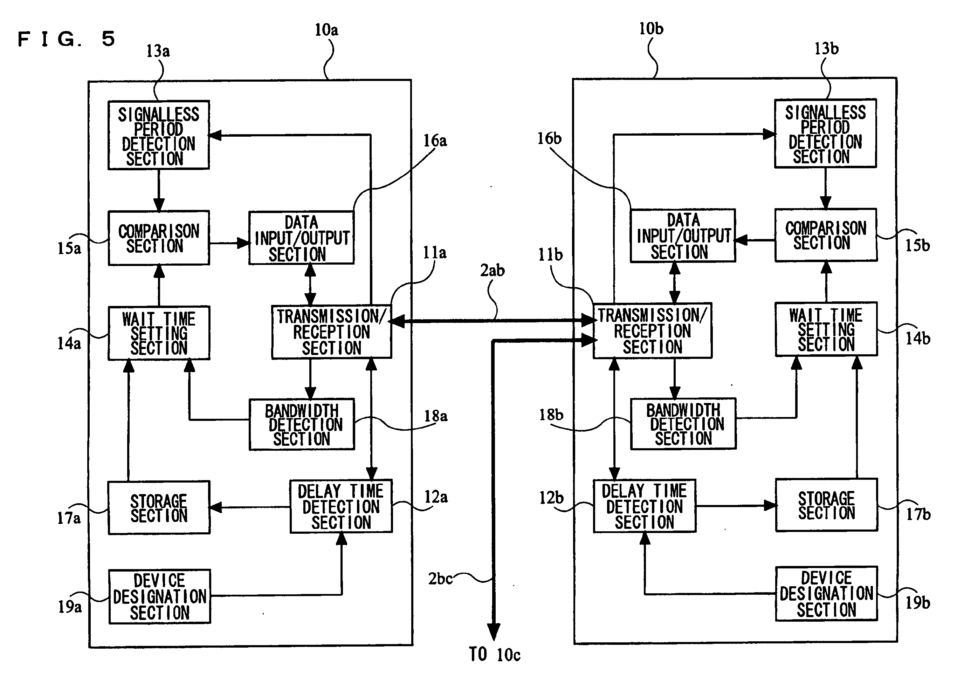

Referring to FIGS. 4 and 5, the structure of the data transfer system according to the second embodiment of the present invention will be described. FIG. 4 is a schematic block diagram illustrating the overall data transfer system. FIG. 5 is a block diagram illustrating the structure of a portion of the data transfer system. For conciseness, the data transfer system will be described with respect to a specific example in which three data transfer apparatuses 10a, 10b, and 10c are connected to one another. Note that FIG. 5 only illustrates the structure of the data transfer apparatuses 10a and 10b, while conveniently omitting the data transfer apparatus 10c from illustration.

As shown in FIG. 4, the data transfer system comprises the data transfer apparatuses 10a to 10c as well as transmission paths 2ab and 2bc. The data transfer apparatuses 10a and 10b are interconnected via the transmission path 2ab, whereas the data transfer apparatuses 10b and 10c are interconnected via the transmission path 2bc. It is assumed that exchange of data signals and reply signals can occur between the data transfer apparatuses 10a and 10b and between the data transfer apparatuses 10b and 10c, but no exchange of data signals and reply signals occurs between the data transfer apparatuses 10a and 10c.

Referring to FIG. 5, the data transfer apparatus 10a comprises a transmission/reception section 11a, a delay time detection section 12a, a signalless period detection section 13a, a wait time setting section 14a, a comparison section 15a, a data input/output section 16a, a storage section 17a, a bandwidth detection section 18a, and a device designation section 19a. The data transfer apparatus 10b comprises a transmission/reception section 11b, a delay time detection section 12b, a signalless period detection section 13b, a wait time setting section 14b, a comparison section 15b, a data input/output section 16b, a storage section 17b, a bandwidth detection section 18b, and a device designation section 19b. As mentioned above, the data transfer apparatus 10c is omitted from illustration. The transmission/reception section 11b of the data transfer apparatus 10b is connected to the transmission/reception section 11a of the data transfer apparatus 10a via the transmission path 2ab, and further to the transmission/reception section 11c of the transfer apparatus 10c (not shown) via the transmission path 2bc.

As compared to the first embodiment above, it will be seen that the data transfer apparatuses 10a to 10c according to the second embodiment additionally comprise the device designation sections 19a to 19c, respectively. Since the other component elements are similar to those in the first embodiment, like reference numerals are attached to like component elements, and the detailed descriptions thereof are omitted.

For example, if the data transfer apparatus 10a is set as a master station (root) in the data transfer system, the device designation section 19a outputs to the delay time detection section 12a a signal which designates each pair of data transfer apparatuses among the data transfer apparatuses 10a to 10c between which exchange of data signals and corresponding reply signals is mutually performed. In the exemplary data transfer system shown in FIG. 4, the device designation section 19a outputs to the delay time detection section 12a a signal designating the pair of data transfer apparatuses 10a and 10b and the pair of data transfer apparatuses 10b and 10c with respect to the aforementioned signal exchange. Then, with respect to each designated pair of data transfer apparatuses, the delay time detection section 12a outputs transmission delay time information to the storage section 17a.

Alternatively, each of the device designation sections 19a to 19c may output to the delay time detection sections 12a to 12c, respectively, a signal designating a counterpart data transfer apparatus with which to perform exchange of data signals and corresponding reply signals. In this case, the device designation section 19a will designate the data transfer apparatus 10b as a counterpart of the aforementioned signal exchange. The device designation section 19b will designate the data transfer apparatuses 10a and 10c as counterparts of the aforementioned signal exchange. The device designation section 19c will designate the data transfer apparatus 10b as a counterpart of the aforementioned signal exchange.

Next, the data transfer method to be performed in the data transfer system according second embodiment will be described with respect to the case where the data transfer apparatus 10a is set as the master station (root) in the data transfer system. As compared to the first embodiment which has been illustrated with reference to FIG. 2, the data transfer method according to the second embodiment differs only with respect to the process of step S2. Therefore, only the different process of step S2 will be described herein, while omitting the description of the process of any other step.

At step S2 in the second embodiment, with respect to each pair of data transfer apparatuses among the data transfer apparatuses 10a to 10c between which mutual data transfer is performed, a transmission delay time incurred for the data transfer is detected, after which the process proceeds to the next step S3. First, the delay time detection section 12a outputs to the transmission/reception section 11a a control signal for enabling detection of transmission delay time. At this time, the delay time detection section 12a retains information of the point in time at which the control signal was output. The control signal is sent from the transmission/reception section 11a onto the transmission paths 2ab and 2bc, and received by the transmission/reception sections 11b and 11c of the data transfer apparatuses 10b and 10c, respectively. The transmission/reception sections 11b and 11c output the received control signal to the delay time detection sections 12b and 12c, respectively. Next, after receiving the control signal, the delay time detection sections 12b and 12c output a reply signal corresponding to the control signal to the transmission/reception sections 11b and 11c, respectively. The reply signals are sent from the transmission/reception sections 11b and 11c onto the transmission paths 2ab and 2bc, respectively, and received by the transmission/reception section11a of the data transfer apparatus 10a. The transmission/reception section 11a outputs the received reply signals to the delay time detection section 12a.

Next, the delay time detection section 12a detects a transmission delay time between the data transfer apparatuses 10a and 10b by comparing the point in time at which the control signal was output against the point in time at which the reply signal was received from the data transfer apparatus 10b. Moreover, the delay time detection section 12a detects a transmission delay time between the data transfer apparatuses 10a and 10c by comparing the point in time at which the control signal was output against the point in time at which the reply signal was received from the data transfer apparatus 10c.

As shown in FIG. 4, no data transfer is performed between the data transfer apparatuses 10a and 10c, whereas exchange of data signals and reply signals is to occur between the data transfer apparatuses 10a and 10b and between the data transfer apparatuses 10b and 10c. Information indicating such pairs is supplied from the device designation section 19a to the delay time detection section 12a. Accordingly, by using the transmission delay time between the data transfer apparatuses 10a and 10b and the transmission delay time between the data transfer apparatuses 10a and 10c, the delay time detection section 12a calculates a transmission delay time between the data transfer apparatuses 10b and 10c. For example, the delay time detection section 12a may calculate the transmission delay time between the data transfer apparatuses 10b and 10c by simply subtracting the transmission delay time between the data transfer apparatuses 10a and 10b from the transmission delay time between the data transfer apparatuses 10a and 10c. Then, the delay time detection section 12a outputs the transmission delay time between the data transfer apparatuses 10a and 10b and the transmission delay time between the data transfer apparatuses 10b and 10c to the storage section 17a. The storage section 17a stores the information of the transmission delay time for each specific pair, and outputs the information to the wait time setting section 14a as necessary. In the subsequent processing, a wait time is set based on the transmission delay time information stored in the storage section 17a.

Thus, in the data transfer system according to the second embodiment, a transmission delay time detection is performed only with respect to each pair of data transfer apparatuses between which data signals and corresponding reply signals are mutually exchanged, and a wait time is set based on such transmission delay time information. For example, although the longest transmission delay time would be incurred between the data transfer apparatuses 10a and 10c in the data transfer system shown in FIG. 4, no exchange of data signals and reply signals is actually performed between the data transfer apparatuses 10a and 10c. In this case, the transmission delay time between the data transfer apparatuses 10a and 10c is disregarded. Thus, it is possible to prescribe a wait time which does not produce any superfluous signalless periods (i.e., a wait time which disregards the transmission delay time for any pair of data transfer apparatuses between which data transfer is not performed), whereby an efficient wait time can be set.

While the invention has been described in detail, the foregoing description is in all aspects illustrative and not restrictive. It is understood that numerous other modifications and variations can be devised without departing from the scope of the invention as defined by the appended claims.

**Claims**

1.   A data transfer apparatus (1a, 10a) used in a data transfer system for exchanging data with another apparatus (1b, 10b, 10c) in the data transfer system via a transmission path (2), the data comprising a periodic data signal (ID1 to ID3) which requires periodic transmission and a sporadically-occurring asynchronous sporadic data signal (AD, AP), the periodic data signal and the sporadic data signal being time-multiplexed with each other, the data transfer apparatus comprising:

a transmission/reception section (11a) for exchanging the periodic data signal and the sporadic data signal with the other apparatus via the transmission path;
a delay time detection section (12a) for detecting a transmission delay time incurred when exchanging a data signal with the other apparatus;
a bandwidth detection section (18a) for detecting a bandwidth (T2) required for exchanging the periodic data signal;
a signalless detection section (13a) for detecting a signalless state (SG) of a data signal which is transmitted on the transmission path;
a wait time setting section (14a) for setting in the detected signalless state, a wait time (T4) to be observed before beginning a data transfer, such that the wait time is equal to or greater than the transmission delay time detected by the delay time detection section and guarantees the bandwidth detected by the bandwidth detection section; and
a comparison section (15a) for, if a period of the signalless state detected by the signalless detection section becomes longer than the wait time set by the wait time setting section, beginning a data transfer from the transmission/reception section, wherein
the periodic data signal and the sporadic data signal are transmitted on the transmission path with a certain cycle, the certain cycle falling between synchronization signals (CSP) which are generated with a predetermined cycle period (T), and
the wait time setting section sets the wait time so as to guarantee the bandwidth detected by the bandwidth detection section by ensuring that the wait time, denoted as T4, satisfies the relationship:

$$T4 \leq \{T-(T1+T2+T3)\}/2,$$

where T denotes the predetermined cycle period; T1 denotes a transmission bandwidth required for each synchronization signal; T2 denotes the bandwidth required for exchanging the periodic data signal as detected by the bandwidth detection section; and T3 denotes a bandwidth required for exchanging the sporadic data signal.

2.   The data transfer apparatus according to claim 1, wherein the wait time setting section sets a wait time to be observed before beginning a data transfer of the sporadic data signal in response to the detected signalless period.

3.   The data transfer apparatus according to claim 1, wherein,
the bandwidth required for exchanging the periodic data signal as detected by the bandwidth detection section is a bandwidth for isochronous transfer under the IEEE1394 standard,
the bandwidth required for exchanging the sporadic data signal is a bandwidth for asynchronous transfer under the IEEE1394 standard, and
the transmission bandwidth required for each synchronization signal is a transmission bandwidth for a cycle start packet under the IEEE1394 standard.

4.   The data transfer apparatus according to claim 1, wherein the delay time detection section transmits via the transmission/reception section a control signal for enabling detection of the transmission delay time to the other apparatus, thereafter receives via the transmission/reception section a reply signal returned from the other apparatus in response to the control signal, and detects the transmission delay time based on a point in time at which the control signal is transmitted and a point in time at which the reply signal is received.

**5.** The data transfer apparatus according to claim 1, further comprising an apparatus designation section (19a) for designating, in the data transfer system, a pair of apparatuses which exchange a data signal with each other, wherein the delay time detection section detects a transmission delay time incurred when a data signal is exchanged between the pair of apparatuses designated by the apparatus designation section.

**6.** The data transfer apparatus according to claim 5, wherein,
the delay time detection section transmits via the transmission/reception section a control signal for enabling detection of the transmission delay time to all other apparatuses in the data transfer system, thereafter receives via the transmission/reception section a reply signal returned from each of the other apparatuses in response to the control signal, and detects the transmission delay time for each of the other apparatuses based on a point in time at which the control signal is transmitted and a point in time at which each reply signal is received, and
the delay time detection section detects a first transmission delay time based on the point in time at which the control signal is transmitted and the point in time at which the reply signal is received from a first one of the other apparatuses, detects a second transmission delay time based on the point in time at which the control signal is transmitted and the point in time at which the reply signal is received from a second one of the other apparatuses, and subtracts the first transmission delay time from the second transmission delay time, or vice versa, to calculate a transmission delay time with respect to the pair of first and second other apparatuses as designated by the apparatus designation section.

**7.** The data transfer apparatus according to claim 1, wherein the bandwidth detection section detects the bandwidth required for exchanging the periodic data signal based on a control signal which is previously transmitted in order to guarantee the bandwidth used for transmitting the periodic data signal.

**8.** The data transfer apparatus according to claim 1, further comprising a storage section (17a, etc.) having previously stored therein information of a transmission delay time to be incurred when exchanging a data signal with the other apparatus,
wherein the delay time detection section uses the information stored in the storage section to detect the transmission delay time incurred when exchanging a data signal with the other apparatus.

**9.** The data transfer apparatus according to claim 1, further comprising a storage section having previously stored therein information for exchanging the periodic data signal,
wherein the bandwidth detection section uses the information stored in the storage section to detect the bandwidth required for exchanging the periodic data signal.

**10.** A data transfer method for allowing one of a plurality of apparatuses (1a, 1b, 10a to 10c) in a data transfer system to exchange data with another apparatus in the data transfer system via a transmission path, the data comprising a periodic data signal which requires periodic transmission and a sporadically-occurring asynchronous sporadic data signal, the periodic data signal and the sporadic data signal being time-multiplexed with each other, the data transfer method comprising:

a delay time detection step (32) of detecting a transmission delay time incurred when exchanging a data signal with the other apparatus;
a bandwidth detection step (34) of detecting a bandwidth required for at least one apparatus in the data transfer system to exchange the periodic data signal;
a signalless detection step of detecting a signalless state of a data signal which is transmitted on the transmission path;
a wait time setting step (35) of setting in the detected signalless state, a wait time to be observed before beginning a data transfer, such that the wait time is (S3) equal to or greater than the transmission delay time detected by the delay time detection step and guarantees (34) the bandwidth detected by the bandwidth detection step; and
a transmission beginning step (S6, S7) for, if a period of the signalless state by the signalless detection section becomes longer than the wait time set by the wait time setting step, allowing at least one apparatus in the data transfer system to begin a data transfer, wherein,
the periodic data signal and the sporadic data signal are transmitted on the transmission path with a certain cycle, the certain cycle falling between synchronization signals (CSP) which are generated with a predetermined cycle period (T), and
the wait time setting step sets the wait time so as to guarantee the bandwidth detected by the bandwidth detection step by ensuring that the wait time, denoted as T4, satisfies the relationship:

$$T4 \leq \{T-(T1+T2+T3)\}/2,$$

where T denotes the predetermined cycle period; T1 denotes a transmission bandwidth required for each synchronization signal; T2 denotes the bandwidth required for exchanging the periodic data signal as detected by the bandwidth detection step;
and T3 denotes a bandwidth required for exchanging the sporadic data signal.

11. The data transfer method according to claim 10, wherein the wait time setting step sets a wait time to be observed before beginning a data transfer of the sporadic data signal in response to the detected signalless period.

12. The data transfer method according to claim 10, wherein,
the bandwidth required for exchanging the periodic data signal as detected by the bandwidth detection step is a bandwidth for isochronous transfer under the IEEE1394 standard,
the bandwidth required for exchanging the sporadic data signal is a bandwidth for asynchronous transfer under the IEEE1394 standard, and
the transmission bandwidth required for each synchronization signal is a transmission bandwidth for a cycle start packet under the IEEE1394 standard.

13. The data transfer method according to claim 10, wherein the delay time detection step transmits in the transmission/reception step a control signal for enabling detection of the transmission delay time to the other apparatus, thereafter receives in the transmission/reception step a reply signal returned from the other apparatus in response to the control signal, and detects the transmission delay time based on a point in time at which the control signal is transmitted and a point in time at which the reply signal is received.

14. The data transfer method according to claim 10, further comprising an apparatus designation step (19a) for designating, in the data transfer system, a pair of apparatuses which exchange a data signal with each other,
wherein the delay time detection step detects a transmission delay time incurred when a data signal is exchanged between the pair of apparatuses designated by the apparatus designation step.

15. The data transfer method according to claim 14, wherein,
the delay time detection step transmits in the transmission/reception step a control signal for enabling detection of the transmission delay time to all other apparatuses in the data transfer system, thereafter receives in the transmission/reception step a reply signal returned from each of the other apparatuses in response to the control signal, and detects the transmission delay time for each of the other apparatuses based on a point in time at which the control signal is transmitted and a point in time at which each reply signal is received, and
the delay time detection step detects a first transmission delay time based on the point in time at which the control signal is transmitted and the point in time at which the reply signal is received from a first one of the other apparatuses, detects a second transmission delay time based on the point in time at which the control signal is transmitted and the point in time at which the reply signal is received from a second one of the other apparatuses, and subtracts the first transmission delay time from the second transmission delay time, or vice versa, to calculate a transmission delay time with respect to the pair of first and second other apparatuses as designated by the apparatus designation step.

16. The data transfer method according to claim 10, where in the bandwidth detection step detects the bandwidth required for exchanging the periodic data signal based on a control signal which is previously transmitted in order to guarantee the bandwidth used for transmitting the periodic data signal.

17. The data transfer method according to claim 10, wherein the delay time detection step detects the transmission delay time incurred when exchanging a data signal with the other apparatus by using previously-set information.

18. The data transfer method according to claim 10, wherein the bandwidth detection step detects the bandwidth required for exchanging the periodic data signal by using previously-set information.

**Patentansprüche**

1. Datenübertragungsvorrichtung (1a, 10a), welche in einem Datenübertragungssystem zum Austausch von Daten über einen Übermittlungsweg (2) mit einer anderen Vorrichtung (1b, 10b, 10c) im Datenübertragungssystem verwendet wird, wobei die Daten ein periodisches Datensignal (ID1 bis ID3), welches eine periodische Übermittlung erfordert, und ein sporadisch auftretendes asynchrones sporadisches Datensignal (AD, AP) umfassen, wobei das periodische Datensignal und das sporadische Datensignal zeitmultiplex zueinander sind, umfassend:

   einen Übermittlungs-/Empfangsabschnitt (11a) zum Austausch des periodischen Datensignals und des sporadischen Datensignals mit der weiteren Vorrichtung über den Übermittlungsweg,
   einen Verzögerungszeit-Ermittlungsabschnitt (12a) zum Ermitteln einer bei einem Austausch eines Datensignals mit der weiteren Vorrichtung auftretenden Übermittlungsverzögerungszeit,
   einen Bandbreiten-Ermittlungsabschnitt (18a) zum Ermitteln einer zum Austausch des periodischen Datensignals erforderlichen Bandbreite (T2),
   einen Signallos-Ermittlungsabschnitt (13a) zum Ermitteln eines signallosen Zustands (SG) eines über den Übermittlungsweg übermittelten Datensignals;
   einen Wartezeit-Festsetzungsabschnitt (14a) zum Festsetzen im ermittelten signallosen Zustand einer vor einem Beginn einer Datenübertragung einzuhaltenden Wartezeit (T4) derart, dass die Wartezeit größer oder gleich der vom Verzögerungszeit-Ermittlungsabschnitt ermittelten Übermittlungsverzögerungszeit ist und die vom Bandbreiten-Ermittlungsabschnitt ermittelte Bandbreite gewährleistet wird, und
   einen Vergleichsabschnitt (15a) zum Beginnen einer Datenübertragung vom Übermittlungs-/Empfangsabschnitt, falls eine Periode des vom Signallos-Ermittlungsabschnitt ermittelten signallosen Zustands länger ist als die vom Wartezeit-Festsetzungsabschnitt festgesetzte Wartezeit, wobei
   das periodische Datensignal und das sporadische Datensignal auf dem Übermittlungsweg in einem bestimmten Zyklus übermittelt werden, wobei der bestimmte Zyklus zwischen Synchronisationssignale (CSP) fällt, welche mit einer vorgegebenen Zyklusperiode (T) erzeugt werden, und wobei
   der Wartezeit-Festsetzungsabschnitt die Wartezeit so festsetzt, dass die vom Bandbreiten-Ermittlungsabschnitt ermittelte Bandbreite **dadurch** gewährleistet wird, dass die mit T4 bezeichnete Wartezeit die Beziehung

$$T4 \leq \{ T - (T1 + T2 + T3) \} / 2$$

   erfüllt,

   wobei T die vorgegebene Zyklusperiode, T1 die für jedes Synchronisationssignal erforderliche Übermittlungsbandbreite, T2 die vom Bandbreiten-Ermittlungsabschnitt ermittelte, zum Austausch des periodischen Signals erforderliche Bandbreite und T3 eine zum Austausch des sporadischen Datensignals erforderliche Bandbreite bezeichnen.

2. Datenübertragungsvorrichtung nach Anspruch 1, wobei der Wartezeit-Festsetzungsabschnitt eine Wartezeit festsetzt, welche vor einem Beginn einer Datenübertragung des sporadischen Datensignals als Antwort auf die ermittelte signallose Periode einzuhalten ist.

3. Datenübertragungsvorrichtung nach Anspruch 1, wobei
   die vom Bandbreiten-Ermittlungsabschnitt ermittelte, zum Austausch des periodischen Datensignals erforderliche Bandbreite eine Bandbreite für eine isochrone Übertragung nach dem IEEE1394-Standard ist,
   die zum Austausch des sporadischen Datensignals erforderliche Bandbreite eine Bandbreite für eine asynchrone Übertragung nach dem IEEE1394-Standard ist und
   die für jedes Synchronisationssignal erforderliche Übermittlungsbandbreite eine Übermittlungsbandbreite für ein Zyklusstartpaket nach dem IEEE1394-Standard ist.

4. Datenübertragungsvorrichtung nach Anspruch 1, wobei der Verzögerungszeit-Ermittlungsabschnitt über den Übermittlungs-/Empfangsabschnitt ein Kontrollsignal zum Ermitteln der Übermittlungsverzögerungszeit zur weiteren Vorrichtung übermittelt, danach über den Übermittlungs-/Empfangsabschnitt ein von der weiteren Vorrichtung als Antwort auf das Kontrollsignal zurückgesendetes Antwortsignal empfängt und die Übermittlungsverzögerungszeit auf der Grundlage eines Zeitpunkts, zu welchem das Kontrollsignal übermittelt wird, und eines Zeitpunkts, zu welchem das Antwortsignal empfangen wird, ermittelt.

**5.** Datenübertragungsvorrichtung nach Anspruch 1, des Weiteren umfassend einen Vorrichtungsbestimmungsabschnitt (19a) zum Bestimmen eines Paars von Vorrichtungen im Datenübertragungssystem, welche ein Datensignal miteinander austauschen,
wobei der Verzögerungszeit-Ermittlungsabschnitt eine Übermittlungsverzögerungszeit ermittelt, welche bei einem Austausch eines Datensignals zwischen dem Paar der vom Vorrichtungsbestimmungsabschnitt bestimmten Vorrichtungen aufgetreten ist.

**6.** Datenübertragungsvorrichtung nach Anspruch 5, wobei
der Verzögerungszeit-Ermittlungsabschnitt über den Übermittlungs-/Empfangsabschnitt ein Kontrollsignal zum Ermitteln der Übermittlungsverzögerungszeit zu allen weiteren Vorrichtungen im Datenübertragungssystem übermittelt, danach über den Übermittlungs-/Empfangsabschnitt ein von jeder der weiteren Vorrichtungen als Antwort auf das Kontrollsignal zurückgesendetes Antwortsignal empfängt und die Übermittlungsverzögerungszeit für jede der weiteren Vorrichtungen auf der Grundlage eines Zeitpunkts, zu welchem das Kontrollsignal übermittelt wird, und eines Zeitpunkts, zu welchem jedes Antwortsignal empfangen wird, ermittelt, und
wobei der Verzögerungszeit-Ermittlungsabschnitt eine erste Übermittlungsverzögerungszeit ermittelt auf der Grundlage des Zeitpunkts, zu welchem das Kontrollsignal übermittelt wird, und des Zeitpunkts, zu welchem das Antwortsignal von einer ersten der weiteren Vorrichtungen empfangen, eine zweite Übermittlungsverzögerungszeit ermittelt auf der Grundlage des Zeitpunkts, zu welchem das Kontrollsignal übermittelt wird, und des Zeitpunkts, zu welchem das Antwortsignal von einer zweiten der weiteren Vorrichtungen empfangen wird, und die erste Übermittlungsverzögerungszeit von der zweiten Übermittlungsverzögerungszeit abzieht oder umgekehrt, um im Hinblick auf das vom Vorrichtungsbestimmungsabschnitt bestimmte Paar der ersten und zweiten weiteren Vorrichtung eine Übermittlungsverzögerungszeit zu berechnen.

**7.** Datenübertragungsvorrichtung nach Anspruch 1, wobei der Bandbreiten-Ermittlungsabschnitt die zum Austausch des periodischen Datensignals erforderliche Bandbreite auf der Grundlage eines Kontrollsignals ermittelt, welches zuvor übermittelt wird, um die zum Übermitteln des periodischen Datensignals verwendete Bandbreite zu gewährleisten.

**8.** Datenübertragungsvorrichtung nach Anspruch 1, des Weiteren umfassend einen Speicherabschnitt (17a usw.) mit einer zuvor darauf gespeicherten Information über eine beim Austausch eines Datensignals mit der weiteren Vorrichtung auftretende Übermittlungsverzögerungszeit,
wobei der Verzögerungszeit-Ermittlungsabschnitt die im Speicherabschnitt gespeicherte Information verwendet, um die beim Austausch eines Datensignals mit der weiteren Vorrichtung auftretende Übermittlungsverzögerungszeit zu ermitteln.

**9.** Datenübertragungsvorrichtung nach Anspruch 1, des Weiteren umfassend einen Speicherabschnitt mit einer zuvor darauf gespeicherten Information zum Austausch des periodischen Datensignals,
wobei der Bandbreiten-Ermittlungsabschnitt die im Speicherabschnitt gespeicherten Information verwendet, um die zum Austausch des periodischen Datensignals erforderliche Bandbreite zu ermitteln.

**10.** Datenübertragungsverfahren zum Austausch von Daten zwischen einer von mehreren Vorrichtungen (1a, 1b, 10a bis 10c) in einem Datenübertragungssystem und einer weiteren Vorrichtung im Datenübertragungssystem über einen Übermittlungsweg, wobei die Daten ein periodisches Datensignal, welches eine periodische Übermittlung erfordert, und ein sporadisch auftretendes asynchrones sporadisches Datensignal umfassen, wobei das periodische Datensignal und das sporadische Datensignal zeitmultiplex zueinander sind, umfassend:

einen Verzögerungszeit-Ermittlungsschritt (32) zum Ermitteln einer bei einem Austausch eines Datensignals mit der weiteren Vorrichtung auftretenden Übermittlungsverzögerungszeit;
einen Bandbreiten-Ermittlungsschritt (34) zum Ermitteln einer Bandbreite, welche zum Austausch des periodischen Datensignals für zumindest eine Vorrichtung im Datenübertragungssystem erforderlich ist;
einen Signallos-Ermittlungsschritt zum Ermitteln eines signallosen Zustands eines auf dem Übermittlungsweg übermittelten Datensignals;
einen Wartezeit-Festsetzungsschritt (35) zum Festsetzen einer vor einem Beginn einer Datenübertragung einzuhaltenden Wartezeit im ermittelten signallosen Zustand derart, dass die Wartezeit (S3) größer oder gleich der im Verzögerungszeit-Ermittlungsschritt ermittelten Übermittlungsverzögerungszeit ist und die im Bandbreiten-Ermittlungsschritt ermittelte Bandbreite gewährleistet wird;
einen Übermittlungsbeginnschritt (S6, S7) zum Zulassen eines Beginns einer Datenübertragung für zumindest eine Vorrichtung im Datenübertragungssystem, falls eine Periode des im Signallos-Ermittlungsschritt ermittelten signallosen Zustands länger ist als die im Wartezeit-Festsetzungsschritt festgesetzte Wartezeit,

wobei das periodische Datensignal und das sporadische Datensignal auf dem Übermittlungsweg in einem bestimmten Zyklus übermittelt werden, wobei der bestimmte Zyklus zwischen Synchronisationssignale (CSP) fällt, welche mit einer vorgegebenen Zyklusperiode erzeugt werden, und
wobei im Wartezeit-Festsetzungsschritt die Wartezeit so festgesetzt wird, dass die im Bandbreiten-Ermittlungsschritt ermittelte Bandbreite **dadurch** gewährleistet wird, dass die mit T4 bezeichnete Wartezeit die Beziehung:

$$T4 \leq \{T-(T1+T2+T3)\}/2,$$

erfüllt,
wobei T die vorgegebene Zyklusperiode, T1 eine für jedes Synchronisationssignal erforderliche Übermittlungsbandbreite, T2 die im Bandbreiten-Ermittlungsschritt ermittelte, zum Austausch des periodischen Datensignals erforderliche Bandbreite und T3 eine zum Austausch des sporadischen Datensignals erforderliche Bandbreite bezeichnen.

11. Datenübertragungsverfahren nach Anspruch 10, wobei im Wartezeit-Festsetzungsschritt eine Wartezeit festgesetzt wird, welche vor einem Beginn einer Datenübertragung des sporadischen Datensignals als Antwort auf die ermittelte signallose Periode einzuhalten ist.

12. Datenübertragungsverfahren nach Anspruch 10, wobei
die im Bandbreiten-Ermittlungsschritt ermittelte, zum Austausch des periodischen Datensignals erforderliche Bandbreite eine Bandbreite für eine isochrone Übertragung nach dem IEEE1394-Standard ist,
die zum Austausch des sporadischen Datensignals erforderliche Bandbreite eine Bandbreite für eine asynchrone Übertragung nach dem IEEE1394-Standard ist und
die zum Übermitteln für jedes Synchronisationssignal erforderliche Bandbreite eine Übermittlungsbandbreite für ein Zyklusstartpaket nach dem IEEE1394-Standard ist.

13. Datenübertragungsverfahren nach Anspruch 10, wobei
im Verzögerungszeit-Ermittlungsschritt im Übermittlungs-/Empfangsschritt ein Kontrollsignal zum Ermitteln der Übermittlungsverzögerungszeit zu der weiteren Vorrichtung übermittelt wird, danach im Übermittlungs-/Empfangsschritt ein von der weiteren Vorrichtung als Antwort auf das Kontrollsignal zurückgesendetes Antwortsignal empfangen wird und die Übermittlungsverzögerungszeit auf der Grundlage eines Zeitpunkts, zu welchem das Kontrollsignal übermittelt wird, und eines Zeitpunkts, zu welchem das Antwortsignal empfangen wird, ermittelt wird.

14. Datenübertragungsverfahren nach Anspruch 10, des Weiteren umfassend einen Vorrichtungsbestimmungsschritt (19a) zum Bestimmen eines Paars von Vorrichtungen im Datenübertragungssystem, welche ein Datensignal miteinander austauschen,
wobei im Verzögerungszeit-Ermittlungsschritt eine Übermittlungsverzögerungszeit ermittelt wird, welche bei einem Austausch eines Datensignals zwischen dem Paar der im Vorrichtungsbestimmungsschritt bestimmten Vorrichtungen aufgetreten ist.

15. Datenübertragungsverfahren nach Anspruch 14, wobei
im Verzögerungszeit-Ermittlungsschritt im Übermittlungs-/Empfangsschritt ein Kontrollsignal zum Ermitteln der Übermittlungsverzögerungszeit zu allen weiteren Vorrichtungen im Datenübertragungssystem übermittelt wird, danach im Übermittlungs-/Empfangsschritt ein von jeder der weiteren Vorrichtungen als Antwort auf das Kontrollsignal zurückgesendetes Antwortsignal empfangen wird und die Übermittlungsverzögerungszeit für jede der weiteren Vorrichtungen auf der Grundlage eines Zeitpunkts, zu welchem das Kontrollsignal übermittelt wird, und eines Zeitpunkts, zu welchem jedes Antwortsignal empfangen wird, ermittelt wird, und
wobei im Verzögerungszeit-Ermittlungsschritt eine erste Übermittlungsverzögerungszeit ermittelt wird auf der Grundlage des Zeitpunkts, zu welchem das Kontrollsignal übermittelt wird, und des Zeitpunkts, zu welchem das Antwortsignal von einer ersten der weiteren Vorrichtungen empfangen wird, eine zweite Übermittlungsverzögerungszeit ermittelt wird auf der Grundlage des Zeitpunkts, zu welchem das Kontrollsignal übermittelt wird, und des Zeitpunkts, zu welchem das Antwortsignal von einer zweiten der weiteren Vorrichtungen empfangen wird, und die erste Übermittlungsverzögerungszeit von der zweiten Übermittlungsverzögerungszeit oder umgekehrt abgezogen wird, um im Hinblick auf das im Vorrichtungsbestimmungsschritt bestimmte Paar der ersten und zweiten weiteren Vorrichtung eine Übermittlungsverzögerungszeit zu berechnen.

**16.** Datenübertragungsverfahren nach Anspruch 10, wobei im Bandbreiten-Ermittlungsschritt die zum Austausch des periodischen Datensignals erforderliche Bandbreite auf der Grundlage eines Kontrollsignals ermittelt wird, welches zuvor übermittelt wird, um die zum Übermitteln des periodischen Datensignals verwendete Bandbreite zu gewährleisten.

**17.** Datenübertragungsverfahren nach Anspruch 10, wobei im Verzögerungszeit-Ermittlungsschritt die bei einem Austausch eines Datensignals mit der weiteren Vorrichtung aufgetretene Übermittlungsverzögerungszeit unter Verwendung einer zuvor festgelegten Information ermittelt wird.

**18.** Datenübertragungsverfahren nach Anspruch 10, wobei im Bandbreiten-Ermittlungsschritt die zum Austausch des periodischen Datensignals erforderliche Bandbreite unter Verwendung einer zuvor festgelegten Information ermittelt wird.

**Revendications**

**1.** Dispositif (1a, 10a) de transfert de données utilisé dans un système de transfert de données pour échanger des données avec un autre dispositif (1b, 10b, 10c) dans le système de transfert de données par l'intermédiaire d'une voie (2) de transmission, les données comprenant un signal périodique (ID1 à ID3) de données qui requiert une transmission périodique et un signal sporadique asynchrone (AD, AP) de données se produisant sporadiquement, le signal périodique de données et le signal sporadique de données étant multiplexés en temps l'un avec l'autre, le dispositif de transfert de données comprenant :
une section (11a) d'émission/réception destinée à échanger le signal périodique de données et le signal sporadique de données avec l'autre dispositif par l'intermédiaire de la voie de transmission ;
une section (12a) de détection de temps de retard destinée à détecter un temps de retard de transmission survenant lors de l'échange d'un signal de données avec l'autre dispositif ;
une section (18a) de détection de largeur de bande destinée à détecter une largeur de bande (T2) nécessaire à l'échange du signal périodique de données ;
une section (13a) de détection d'absence de signal destinée à détecter un état (SG) d'absence de signal d'un signal de données qui est transmis sur la voie de transmission ;
une section (14a) de détermination de temps d'attente destinée à fixer, dans l'état d'absence de signal, un temps d'attente (T4) à observer avant de commencer un transfert de données, de manière à ce que le temps d'attente soit égal ou supérieur au temps de retard de transmission détecté par la section de détection de temps de retard et garantisse la largeur de bande détectée par la section de détection de largeur de bande ; et
une section (15a) de comparaison destinée, si une période d'état d'absence de signal détectée par la section de détection d'absence de signal devient plus longue que le temps d'attente fixé par la section de détermination de temps d'attente, à commencer un transfert de données à partir de la section d'émission/réception, dans lequel
le signal périodique de données et le signal sporadique de données sont transmis sur la voie de transmission selon un certain cycle, le certain cycle tombant entre les signaux de synchronisation (CSP) qui sont générés selon une période (T) prédéterminée du cycle, et
la section de détermination de temps d'attente fixe le temps d'attente de manière à garantir la largeur de bande détectée par la section de détection de largeur de bande en s'assurant que le temps d'attente, appelé T4, satisfait à la relation

$$T4 \leq \{T - (T1 + T2 + T3)\}/2,$$

où T désigne la période prédéterminée du cycle ; T1 désigne une largeur de bande de transmission nécessaire à chaque signal de synchronisation ; T2 désigne la largeur de bande nécessaire à l'échange du signal périodique de données telle qu'elle a été détectée par la section de détection de largeur de bande ; et T3 désigne la largeur de bande nécessaire à l'échange du signal sporadique de données.

**2.** Dispositif de transfert de données selon la revendication 1, dans lequel la section de détermination de temps d'attente fixe un temps d'attente à observer avant de commencer un transfert de données du signal sporadique de données en réponse à la période d'absence de signal détectée.

**3.** Dispositif de transfert de données selon la revendication 1, dans lequel

la largeur de bande nécessaire à l'échange du signal périodique de données, telle qu'elle a été détectée par la section de détection de largeur de bande, est une largeur de bande pour le transfert isochrone selon la norme IEEE1394,

la largeur de bande nécessaire à l'échange du signal sporadique de données est une largeur de bande pour le transfert asynchrone selon la norme IEEE1394, et

la largeur de bande de transmission nécessaire pour chaque signal de synchronisation est une largeur de bande de transmission pour un paquet de démarrage de cycle selon la norme IEEE1394.

**4.** Dispositif de transfert de données selon la revendication 1, dans lequel la section de détection de temps de retard transmet par l'intermédiaire de la section d'émission/réception un signal de commande destiné à activer la détection du temps de retard de transmission à l'autre dispositif, reçoit après cela par l'intermédiaire de la section d'émission/réception un signal de réponse renvoyé par l'autre dispositif en réponse au signal de commande, et détecte le temps de retard de transmission en se basant sur un point du temps auquel le signal de commande est émis et un point du temps auquel le signal de réponse est reçu.

**5.** Dispositif de transfert de données selon la revendication 1, comprenant en outre une section (19a) de désignation de dispositifs, destinée à désigner, dans le système de transfert de données, une paire de dispositifs qui échangent un signal de données l'un avec l'autre,

dans lequel la section de détection de temps de retard détecte un temps de retard de transmission survenu quand un signal de données est échangé entre la paire de dispositifs désignés par la section de désignation de dispositifs.

**6.** Dispositif de transfert de données selon la revendication 5, dans lequel

la section de détection de temps de retard transmet par l'intermédiaire de la section d'émission/réception un signal de commande destiné à activer la détection du temps de retard de transmission à tous les autres dispositifs dans le système de transfert de données, reçoit après cela par l'intermédiaire de la section d'émission/réception un signal de réponse renvoyé par chacun des autres dispositifs en réponse au signal de commande, et détecte le temps de retard de transmission pour chacun des autres dispositifs en se basant sur un point du temps auquel le signal de commande est émis et un point du temps auquel chaque signal de réponse est reçu, et

la section de détection de temps de retard détecte un premier temps de retard de transmission en se basant sur le point du temps auquel le signal de commande est émis et le point du temps auquel le signal de réponse est reçu d'un premier des autres dispositifs, détecte un deuxième temps de retard de transmission en se basant sur le point du temps auquel le signal de commande est émis et le point du temps auquel le signal de réponse est reçu d'un deuxième des autres dispositifs, et soustrait le premier temps de retard de transmission du deuxième temps de retard de transmission ou vice versa, afin de calculer un temps de retard de transmission par rapport à la paire des premier et deuxième autres dispositifs, tels qu'ils sont désignés par la section de désignation de dispositifs.

**7.** Dispositif de transfert de données selon la revendication 1, dans lequel la section de détection de largeur de bande détecte la largeur de bande nécessaire à l'échange du signal périodique de données en se basant sur un signal de commande qui est transmis antérieurement de manière à garantir la largeur de bande utilisée pour transmettre le signal périodique de données.

**8.** Dispositif de transfert de données selon la revendication 1, comprenant en outre une section (17a, etc.) de mémorisation ayant antérieurement mémorisé l'information sur un temps de retard de transmission survenu lors d'un échange de signal de données avec l'autre dispositif,

dans lequel la section de détection de temps de retard utilise l'information mémorisée dans la section de mémorisation pour détecter le temps de retard de transmission survenu lors d'un échange de signal de données avec l'autre dispositif.

**9.** Dispositif de transfert de données selon la revendication 1, comprenant en outre une section de mémorisation ayant antérieurement mémorisé l'information pour l'échange du signal périodique de données,

dans lequel la section de détection de largeur de bande utilise l'information mémorisée dans la section de mémorisation pour détecter la largeur de bande nécessaire à l'échange du signal périodique de données.

**10.** Procédé de transfert de données destiné à permettre à un dispositif d'une pluralité (1a, 1b, 10a à 10c) dans un système de transfert de données d'échanger des données avec un autre dispositif dans le système de transfert de données par l'intermédiaire d'une voie de transmission, les données comprenant un signal périodique de données qui requiert une transmission périodique et un signal sporadique asynchrone de données se produisant sporadiquement, le signal périodique de données et le signal sporadique de données étant multiplexés en temps l'un avec l'autre, le procédé de transfert de données comprenant :

une étape (32) de détection de temps retard consistant à détecter un temps de retard de transmission survenu lors de l'échange d'un signal de données avec l'autre dispositif ;

une étape (34) de détection de largeur de bande, consistant à détecter une largeur de bande nécessaire pour au moins un dispositif dans le dispositif de transfert de données pour échanger le signal périodique de données ;

une étape de détection d'absence de signal consistant à détecter un état d'absence de signal d'un signal de données qui est transmis sur la voie de transmission ;

une étape (35) de détermination de temps d'attente consistant à fixer, dans l'état d'absence de signal, un temps d'attente à observer avant de commencer un transfert de données, de manière à ce que le temps d'attente (S3) soit égal ou supérieur au temps de retard de transmission détecté par l'étape de détection de temps de retard et garantisse (34) la largeur de bande détectée par l'étape de détection de largeur de bande ; et

une étape (S6, S7) de commencement de transmission consistant, si une période d'état d'absence de signal détectée par la section de détection d'absence de signal devient plus longue que le temps d'attente fixé par la section de détermination de temps d'attente, à autoriser au moins un dispositif dans le système de transfert de données à commencer un transfert de données, dans lequel

le signal périodique de données et le signal sporadique de données sont transmis sur la voie de transmission selon un certain cycle, le certain cycle tombant entre les signaux de synchronisation (CSP) qui sont générés selon une période (T) prédéterminée du cycle, et

la section de détermination de temps d'attente fixe le temps d'attente de manière à garantir la largeur de bande détectée par la section de détection de largeur de bande en s'assurant que le temps d'attente, appelé T4, satisfait à la relation

$$T4 \leq \{T - (T1 + T2 + T3)\}/2,$$

où T désigne la période prédéterminée du cycle ; T1 désigne une largeur de bande de transmission nécessaire à chaque signal de synchronisation ; T2 désigne la largeur de bande nécessaire à l'échange du signal périodique de données telle qu'elle a été détectée par la section de détection de largeur de bande ;

et T3 désigne la largeur de bande nécessaire à l'échange du signal sporadique de données.

11. Procédé de transfert de données selon la revendication 10, dans lequel la section de détermination de temps d'attente fixe un temps d'attente à observer avant de commencer un transfert de données du signal sporadique de données en réponse à la période d'absence de signal détectée.

12. Dispositif de transfert de données selon la revendication 10, dans lequel

la largeur de bande nécessaire à l'échange du signal périodique de données, telle qu'elle a été détectée par l'étape de détection de largeur de bande, est une largeur de bande pour le transfert isochrone selon la norme IEEE1394,

la largeur de bande nécessaire à l'échange du signal sporadique de données est une largeur de bande pour le transfert asynchrone selon la norme IEEE1394, et

la largeur de bande de transmission nécessaire pour chaque signal de synchronisation est une largeur de bande de transmission pour un paquet de démarrage de cycle selon la norme IEEE1394.

13. Procédé de transfert de données selon la revendication 10, dans lequel l'étape de détection de temps de retard transmet dans l'étape d'émission/réception un signal de commande destiné à activer la détection du temps de retard de transmission à l'autre dispositif, reçoit après cela dans l'étape d'émission/réception un signal de réponse renvoyé par l'autre dispositif en réponse au signal de commande, et détecte le temps de retard de transmission en se basant sur un point du temps auquel le signal de commande est émis et un point du temps auquel le signal de réponse est reçu.

14. Procédé de transfert de données selon la revendication 10, comprenant en outre une étape (19a) de désignation de dispositifs, destinée à désigner, dans le système de transfert de données, une paire de dispositifs qui échangent un signal de données l'un avec l'autre,

dans lequel l'étape de détection de temps de retard détecte un temps de retard de transmission survenu quand un signal de données est échangé entre la paire de dispositifs désignés par l'étape de désignation de dispositifs.

**15.** Procédé de transfert de données selon la revendication 14, dans lequel

l'étape de détection de temps de retard transmet dans l'étape d'émission/réception un signal de commande destiné à activer la détection du temps de retard de transmission à tous les autres dispositifs dans le système de transfert de données, reçoit après cela dans l'étape d'émission/réception un signal de réponse renvoyé par chacun des autres dispositifs en réponse au signal de commande, et détecte le temps de retard de transmission pour chacun des autres dispositifs en se basant sur un point du temps auquel le signal de commande est émis et un point du temps auquel chaque signal de réponse est reçu, et

l'étape de détection de temps de retard détecte un premier temps de retard de transmission en se basant sur le point du temps auquel le signal de commande est émis et le point du temps auquel le signal de réponse est reçu d'un premier des autres dispositifs, détecte un deuxième temps de retard de transmission en se basant sur le point du temps auquel le signal de commande est émis et le point du temps auquel le signal de réponse est reçu d'un deuxième des autres dispositifs, et soustrait le premier temps de retard de transmission du deuxième temps de retard de transmission ou vice versa, afin de calculer un temps de retard de transmission par rapport à la paire des premier et deuxième autres dispositifs, tels qu'ils sont désignés par la section de désignation de dispositifs.

**16.** Procédé de transfert de données selon la revendication 10, dans lequel l'étape de détection de largeur de bande détecte la largeur de bande nécessaire à l'échange du signal périodique de données en se basant sur un signal de commande qui est transmis antérieurement de manière à garantir la largeur de bande utilisée pour transmettre le signal périodique de données.

**17.** Procédé de transfert de données selon la revendication 10, dans lequel l'étape de détection de temps de retard détecte le temps de retard de transmission survenu lors d'un échange de signal de données avec l'autre appareil au moyen d'une information déterminée antérieurement.

**18.** Procédé de transfert de données selon la revendication 10, dans lequel l'étape de détection de largeur de bande détecte la largeur de bande nécessaire à l'échange du signal périodique de données au moyen d'une information déterminée antérieurement.

F I G. 1

FIG. 2

```
                    ┌─────────────────┐
                    │     START       │
                    └─────────────────┘
                             │
                             ▼
S1  ┌────────────────────────────────────┐
    │  DEVICE(S) IS CONNECTED             │
    │     OR POWERED ON                   │
    └────────────────────────────────────┘
                             │
                             ▼
S2  ┌────────────────────────────────────┐
    │ DETECT TRANSMISSION DELAY           │
    │   TIME BETWEEN DEVICES              │
    └────────────────────────────────────┘
                             │
                             ▼
S3        ╱───────────────────────╲
         ╱    IS IT POSSIBLE        ╲        No
        ╱  TO SET WAIT TIME ≧         ╲──────────────────┐
         ╲    DELAY TIME ?           ╱                    │
          ╲───────────────────────╱                       │
                    │ Yes                       S8  ┌──────────────┐
                    │                               │ DATA TRANSFER IS │
                    ▼                               │  IMPOSSIBLE.     │
S4        ╱───────────────────────╲                └──────────────┘
         ╱    IS IT POSSIBLE        ╲    No
        ╱  TO SECURE BANDWIDTH FOR   ╲────────────┐
         ╲    REAL-TIME DATA        ╱              │
          ╲        ?              ╱        S9 ┌──────────────┐
           ╲──────────────────╱              │ SET WAIT TIME │
                    │ Yes                    └──────────────┘
S5  ┌──────────────────────┐                        │
    │   SET WAIT TIME       │             S10 ┌─────────────────┐
    └──────────────────────┘                 │ SPORADIC DATA TRANSFER │
                    │                         │   IS POSSIBLE    │
                    ▼                         └─────────────────┘
S6  ┌──────────────────────────┐                    │
    │ REAL-TIME DATA AND SPORADIC │                 │
    │ DATA TRANSFER ARE POSSIBLE  │                 │
    └──────────────────────────┘                    │
                    │◄──────────────────────────────┘
                    ▼
S7  ┌──────────────────────────┐
    │ BEGIN DATA TRANSFER BETWEEN │
    │       DEVICES               │
    └──────────────────────────┘
                    │
                    ▼
             ┌─────────────┐
             │     END     │
             └─────────────┘
```

# F I G. 3

EP 1 528 737 B1

F I G. 4

10a                    2ab           10b            2bc              10c

| DATA TRANSFER APPARATUS |         | DATA TRANSFER APPARATUS |        | DATA TRANSFER APPARATUS |

DATA TRANSFER IS PERFORMED        DATA TRANSFER IS PERFORMED

DATA TRANSFER IS NOT PERFORMED

FIG. 5

EP 1 528 737 B1

EP 1 528 737 B1

EP 1 528 737 B1

F I G. 7

START

S51 DEVICE(S) IS CONNECTED OR POWERED ON

S52 DETECT TRANSMISSION DELAY TIME BETWEEN DEVICES

S53 IS IT POSSIBLE TO SET WAIT TIME $\geqq$ DELAY TIME ?

No

S56 DATA TRANSFER IS IMPOSSIBLE

Yes

S54 SET WAIT TIME

S55 BEGIN DATA TRANSFER BETWEEN DEVICES

END